(19) Europäisches Patentamt
European Patent Office
Office européen des brevets

(11) EP 4 741 433 A1

(12) # EUROPÄISCHE PATENTANMELDUNG

(43) Veröffentlichungstag:
**13.05.2026 Patentblatt 2026/20**

(21) Anmeldenummer: **24212222.4**

(22) Anmeldetag: **11.11.2024**

(51) Internationale Patentklassifikation (IPC):
***C08G 18/10*** *(2006.01)* ***C08G 18/24*** *(2006.01)*
***C08G 18/32*** *(2006.01)* ***C08G 18/40*** *(2006.01)*
***C08G 18/42*** *(2006.01)* ***C08G 18/48*** *(2006.01)*
***C08G 18/66*** *(2006.01)* ***C08G 18/69*** *(2006.01)*
***C08G 18/76*** *(2006.01)* ***C08G 18/38*** *(2006.01)*
***C08K 3/22*** *(2006.01)*

(52) Gemeinsame Patentklassifikation (CPC):
(C-Sets verfügbar)
**C08G 18/4288; C08G 18/10; C08G 18/246; C08G 18/3206; C08G 18/3876; C08G 18/4018; C08G 18/4858; C08G 18/664; C08G 18/6674; C08G 18/69; C08G 18/7671; C09J 5/00;**
C08G 2170/00; C08K 2003/2227; C08K 2003/322;
(Forts.)

(84) Benannte Vertragsstaaten:
**AL AT BE BG CH CY CZ DE DK EE ES FI FR GB GR HR HU IE IS IT LI LT LU LV MC ME MK MT NL NO PL PT RO RS SE SI SK SM TR**
Benannte Erstreckungsstaaten:
**BA**
Benannte Validierungsstaaten:
**GE KH MA MD TN**

(71) Anmelder: **Sika Technology AG**
**6340 Baar (CH)**

(72) Erfinder: **CHATPHAKAWAN, Phanarin**
**22525 Hamburg (DE)**

(74) Vertreter: **Sika Patent Attorneys**
**C/o Sika Technology AG**
**Corp. IP Dept.**
**Tüffenwies 16**
**8048 Zürich (CH)**

(54) **ZWEIKOMPONENTIGE POLYURETHANZUSAMMENSETZUNG MIT VERBESSERTER ADHÄSION UND EINSTELLBARER TOPFZEIT**

(57) Die vorliegende Erfindung betrifft eine Polyurethanzusammensetzung bestehend aus einer ersten Komponente und einer zweiten Komponente, wobei die erste Komponente mindestens ein Polyol, mindestens ein Diol, mindestens eine Verbindung, die mindestens eine Thiolgruppe aufweist, umfasst, und die zweite Komponente optional mindestens ein Polyol sowie mindestens ein Polyisocyanat umfasst, wobei in einer der beiden Komponente zusätzlich mindestens ein Metallkatalysator für die Reaktion von Hydroxylgruppen und Isocyanatgruppen enthalten ist, der Thiokomplexe bilden kann, und wobei die Polyurethanzusammensetzung zusätzlich mindestens 10 Gew.-%, bezogen auf die gesamte Polyurethanzusammensetzung, eines Flammschutzmittels enthält.

Eine solche Zusammensetzung erlaubt die beliebige Einstellung der Offenzeit der Polyurethanzusammensetzung innerhalb bestimmter Grenzen und ermöglicht es, lange Offenzeiten mit anschliessender sehr rascher Aushärtung der Zusammensetzung zu erreichen und weist auch die Vorteile einer flammhemmenden Zusammensetzung auf und verfügt über eine besonders gute Haftung auf Aluminiumsubstraten.

Weitere Aspekte der Erfindung sind die Verwendung der Polyurethanzusammensetzung und ein Verfahren zum Verkleben von Substraten sowie Artikel entstanden aus dem Verfahren zum Verkleben Gegenstand dieser Erfindung.

Die erfindungsgemässe Zusammensetzung ist besonders geeignet als struktureller Klebstoff zum Verkleben von zwei Substraten, insbesondere im Automobilbereich oder als Dichtstoff oder Vergussmasse.

EP 4 741 433 A1

(52) Gemeinsame Patentklassifikation (CPC): (Forts.)
C09J 2203/354; C09J 2400/163; C09J 2475/00

C-Sets
**C08G 18/10, C08G 18/3206;**
**C08G 18/10, C08G 18/3876;**
**C08G 18/10, C08G 18/40;**
**C08G 18/10, C08G 18/42;**
**C08G 18/10, C08G 18/48;**
**C08G 18/10, C08G 18/664;**
**C08G 18/10, C08G 18/6674;**
**C08K 3/22, C08L 75/04;**
**C08K 3/32, C08L 75/04;**
**C08K 5/37, C08L 75/04;**
**C08K 5/5399, C08L 75/04;**
**C09J 175/04, C08K 3/22, C08K 5/5205,**
**C08K 5/5399, C08K 5/13, C08K 5/5435;**
**C09J 175/04, C08K 3/22, C08K 5/5399,**
**C08K 5/13, C08K 5/5435**

## Beschreibung

### Technisches Gebiet

Die Erfindung betrifft das Gebiet der zweikomponentigen Polyurethan-zusammensetzungen und ihre Verwendung, insbesondere als Klebstoff.

### Stand der Technik

Zweikomponentige Polyurethanzusammensetzungen auf Basis von Polyolen und Polyisocyanaten werden bereits seit langem eingesetzt. Zweikomponentige Polyurethanzusammensetzungen haben gegenüber einkomponentigen den Vorteil, dass sie nach dem Mischen schnell aushärten und deshalb bereits nach kurzer Zeit höhere Kräfte aufnehmen und übertragen können. Für den Einsatz als strukturelle Klebstoffe werden hohe Ansprüche in Bezug auf Festigkeit und Anhaftungskräfte an solche Zusammensetzungen gestellt, da derartige Klebstoffe Elemente von Last tragenden Strukturen darstellen. Insbesondere benötigen solche Zusammensetzungen im ausgehärteten Zustand gute mechanische Eigenschaften wie hohe Zug- und Zugscherfestigkeiten, müssen gleichzeitig aber eine gewisse Elastizität aufweisen. Weiterhin ist es, z.B. in der industriellen Fertigung wünschenswert, dass solche Zusammensetzungen, auch in Anwendungen als Dichtstoff oder als Vergussmasse, möglichst schnell aushärten, was die Taktzeiten verringert.

Um die gewünschten mechanischen Eigenschaften und vor allem eine besonders schnelle Aushärtung zu erreichen, sind in solchen Zusammensetzungen hohe Anteile an Isocyanaten vorteilhaft, die in einer der beiden Komponenten in Form von freien oder an Polymere gebundenen Polyisocyanaten vorliegen und nach Mischen mit der anderen Komponente, die Polyole enthält, unter Bildung eines polymeren Netzwerks aushärten. Ein hoher Gehalt an Isocyanaten führt jedoch zu Problemen. Insbesondere bei Verwendung von Vernetzungskatalysatoren, was für eine selektive, optimale Vernetzung und Aushärtung unerlässlich ist, werden solche zweikomponentigen Systeme fast unkontrollierbar schnell und die Topfzeiten viel zu kurz für eine Anwendung wie oben beschrieben.

Für die Anwendung zweikomponentiger Polyurethanzusammensetzungen ist es generell wünschenswert, eine genügend lange Topfzeit mit einer anschliessend sehr raschen Aushärtung und ausserordentlich schnellem Festigkeitsaufbau kombinieren zu können. Dies lässt sich mit heutigen Zweikomponentenzusammensetzungen aber kaum erreichen. Entweder ist die Topzeit sehr kurz bei Zusammensetzungen, die rasch aushärten und Festigkeit aufbauen, oder aber die Aushärtung und der Festigkeitsaufbau sind langsam, wenn Zusammensetzungen mit langer Topfzeit verarbeitet werden.

Es wurden daher zweikomponentige Polyurethanzusammensetzungen entwickelt, die eine lange, sogar innerhalb gewisser Grenzen einstellbare Topfzeit aufweisen, so dass eine Verarbeitung auch grösserer Bau- oder Fertigungsteile möglich ist, aber die nach Applikation auch sehr rasch aushärten und innert äusserst kurzer Zeit, z.B. Stunden bis wenigen Tagen, Festigkeiten und Elastizität im Sinne von strukturellen Verklebungen aufweisen. Eine solche zweikomponentige Polyurethanzusammensetzung ist in EP3645594B1 offenbart. Diese Veröffentlichung lehrt spezielle Katalysatorsysteme umfassend einen Metallkatalysator und Thiolgruppenhaltige Verbindungen, welche eine einstellbare, lange Topfzeit und anschliessend eine sehr rasche Aushärtung der Zusammensetzung erlauben. Weiterhin beschreibt EP4127008A1 zweikomponentige Polyurethanzusammensetzung mit hoher Hydrophobie und einstellbarer Topfzeit.

Mit der zunehmenden Verwendung von Batterien und elektronischen Geräten ist die Nachfrage nach geeigneten strukturellen Klebstoffen für den Kontakt mit diesen elektronischen Elementen oder Geräten erheblich gestiegen. Bei der Montage von Elektroautos werden die grossen und schweren Batterien und eine Vielzahl elektronischer Teile oft in einer Batteriebox verbaut, welche mit einem Strukturklebstoff verklebt wird. Die Batteriebox wird oft aus Aluminium gefertigt, da dieses Material eine Gewichtsreduktion der schweren Bauteile ermöglicht. Aluminium ist jedoch sehr schwierig zu verkleben mit den aus dem Stand der Technik bekannten Klebstoffzusammensetzungen.

Eine besondere Anforderung an diese Klebstoffe ist eine hohe Feuerbeständigkeit, da Batterien und Elektronik im Betrieb erhebliche Wärmemengen erzeugen und bei einer Fehlfunktion, bspw. einem Kurzschluss, zu einem Batteriebrand führen können. Es wäre daher wünschenswert, eine zweikomponentige Polyurethanzusammensetzung zu erhalten, aber welche ein Katalysatorsystem enthält, das eine lange, einstellbare Topfzeit und eine anschliessende äusserst rasche Aushärtung aufweist und auch die Vorteile einer flammhemmenden Zusammensetzung aufweist, um insbesondere solche Batterieboxen zu verkleben. Ebenfalls muss eine solche Zusammensetzung auf der zu verklebenden Metalloberfläche, insbesondere Aluminium, eine genügend grosse Haftung aufbauen können. Insbesondere die Haftung auf Aluminium stellt oft ein grosses Problem für herkömmliche zweikomponentige Polyurethanklebstoffe dar. So weisen auch Klebstoffe mit einstellbarer Topfzeit, wie in EP3645594B1 offenbart, ungenügende Haftung auf Aluminiumsubstraten auf.

## Darstellung der Erfindung

Aufgabe der vorliegenden Erfindung ist es daher, eine zweikomponentige Polyurethanzusammensetzung mit einstellbarer Topfzeit zur Verfügung zu stellen, die den Anforderungen einer Anwendung als Klebstoff im Automobilbereich genügen, insbesondere sollte eine gute Haftung auf Aluminium erreicht werden.
Überraschenderweise wird diese Aufgabe mit der erfindungsgemässen Polyurethanzusammensetzung gemäss Anspruch 1 gelöst.
Die Zusammensetzung verfügt im ausgehärteten Zustand über gute mechanische Eigenschaften, insbesondere über eine hohe Zugscherfestigkeit und Elastizität und über eine adäquate Bruchdehnung, und weist eine exzellente Flammwidrigkeit von V0 gemessen nach UL94 auf. Nach Mischen der Komponenten härtet die Zusammensetzung nach einer genügend langen, innerhalb gewisser Grenzen einstellbarer Topfzeit sehr schnell aus und erreicht bereits nach kurzer Zeit, bspw. wenigen Stunden bis zu einem Tag, sehr gute mechanische Werte. Ebenso weist die erfindungsgemässe Zusammensetzung überraschenderweise eine ausserordentlich gute Haftung auf Metall, insbesondere Aluminium, auf.
Weitere Aspekte der Erfindung sind Gegenstand weiterer unabhängiger Ansprüche. So ist auch die Verwendung der Polyurethanzusammensetzung und ein Verfahren zum Verkleben von Substraten sowie Artikel entstanden aus dem Verfahren zum Verkleben Gegenstand dieser Erfindung. Besonders bevorzugte Ausführungsformen der Erfindung sind Gegenstand der abhängigen Ansprüche.

## Wege zur Ausführung der Erfindung

Die vorliegende Erfindung betrifft eine Polyurethanzusammensetzung bestehend aus einer ersten Komponente A und einer zweiten Komponente **B,** wobei

- die erste Komponente A
    - mindestens ein Polyol P;
    - mindestens ein Diol O mit einem mittleren Molekulargewicht von weniger als 250 g/mol;
    - mindestens eine Verbindung **T,** die mindestens eine Thiolgruppe aufweist, umfasst;
    und
- Die zweite Komponente B
    - optional ein Polyol P;
    - mindestens ein Polyisocyanat I umfasst;

wobei in einer der beiden Komponente A und B zusätzlich mindestens ein Metallkatalysator K für die Reaktion von Hydroxylgruppen und Isocyanatgruppen enthalten ist, der Thiokomplexe bilden kann, und wobei die Polyurethanzusammensetzung zusätzlich mindestens 10 Gew.-%, bezogen auf die gesamte Polyurethanzusammensetzung, eines Flammschutzmittels **F** enthält.
Die Vorsilbe "Poly" in Substanzbezeichnungen wie "Polyol", "Polyisocyanat", "Polyether" oder "Polyamin" weist im vorliegenden Dokument darauf hin, dass die jeweilige Substanz formal mehr als eine der in ihrer Bezeichnung vorkommenden funktionellen Gruppe pro Molekül enthält.
Der Begriff "Polymer" umfasst im vorliegenden Dokument einerseits ein Kollektiv von chemisch einheitlichen, sich aber in Bezug auf Polymerisationsgrad, Molmasse und Kettenlänge unterscheidenden Makromolekülen, das durch eine Polyreaktion (Polymerisation, Polyaddition, Polykondensation) hergestellt wurde. Der Begriff umfasst andererseits auch Derivate eines solchen Kollektivs von Makromolekülen aus Polyreaktionen, Verbindungen also, die durch Umsetzungen, wie beispielsweise Additionen oder Substitutionen, von funktionellen Gruppen an vorgegebenen Makromolekülen erhalten wurden und die chemisch einheitlich oder chemisch uneinheitlich sein können. Der Begriff umfasst weiterhin auch so genannte Prepolymere, das heisst reaktive oligomere Voraddukte, deren funktionelle Gruppen am Aufbau von Makromolekülen beteiligt sind.
Der Begriff "Polyurethanpolymer" umfasst sämtliche Polymere, welche nach dem so genannten Diisocyanat-Polyadditions-Verfahren hergestellt werden. Dies schliesst auch solche Polymere ein, die nahezu oder gänzlich frei sind von Urethangruppen. Beispiele für Polyurethanpolymere sind Polyether-Polyurethane, Polyester-Polyurethane, Polyether-Polyharnstoffe, Polyharnstoffe, Polyester-Polyharnstoffe, Polyisocyanurate und Polycarbodiimide.
Unter "Molekulargewicht" versteht man im vorliegenden Dokument die molare Masse (in Gramm pro Mol) eines Moleküls oder eines Molekül-Rests.
Als "mittleres Molekulargewicht" wird das Zahlenmittel $M_n$ einer polydispersen Mischung von oligomeren oder

polymeren Molekülen oder Molekül-Resten bezeichnet, welches üblicherweise mittels Gelpermeationschromatographie (GPC) gegen Polystyrol als Standard bestimmt wird.

Gewichtsprozente, abgekürzt Gew.-%, bezeichnen Massenanteile eines Bestandteils einer Zusammensetzung, bezogen auf die gesamte Zusammensetzung, falls nichts anderes angeben. Die Begriffe "Masse" und "Gewicht" werden im vorliegenden Dokument synonym benutzt.

Als "primäre Hydroxylgruppe" wird eine OH-Gruppe bezeichnet, welche an ein C-Atom mit zwei Wasserstoffen gebunden ist.

Als "Topfzeit" wird in diesem Dokument die Zeit bezeichnet, innerhalb welcher die Polyurethanzusammensetzung nach dem Mischen der beiden Komponenten verarbeitet werden kann, bevor die Viskosität durch das Voranschreiten der Vernetzungsreaktion zu hoch für eine weitere Verarbeitung geworden ist.

Der Begriff "Festigkeit" bezeichnet im vorliegenden Dokument die Festigkeit der ausgehärteten Zusammensetzung, wobei mit Festigkeit insbesondere die Zugfestigkeit und das Elastizitätsmodul (E-Modul), insbesondere im Dehnungsbereich 0.05 bis 0.25 % oder im Bereich von 0.5 bis 5.0%, gemeint sind.

Als "Raumtemperatur" wird im vorliegenden Dokument eine Temperatur von 23±1°C bezeichnet.

Unter "Normbedingungen" oder "Normalbedingungen" wird im vorliegenden Dokument die Standardtemperatur von 25°C und der Standardruck von 1013 hPa bezeichnet.

Als "lagerstabil" oder "lagerfähig" wird eine Substanz oder eine Zusammensetzung bezeichnet, wenn sie bei Raumtemperatur in einem geeigneten Gebinde während längerer Zeit, typischerweise mindestens 3 Monaten bis zu 6 Monaten und mehr, aufbewahrt werden kann, ohne dass sie sich in ihren Anwendungs-oder Gebrauchseigenschaften, insbesondere der Viskosität und der Vernetzungsgeschwindigkeit, durch die Lagerung in einem für ihren Gebrauch relevanten Ausmass verändert.

Die "mittlere OH-Funktionalität" stellt die Anzahl der OH-Gruppen pro Polymermolekül, gemittelt über alle Polymermoleküle, dar. Enthalten beispielsweise 50% aller Polymermoleküle zwei und die anderen 50% drei Hydroxygruppen, so ergibt sich eine mittlere OH-Funktionalität von 2,5. Die mittlere OH-Funktionalität kann insbesondere durch Berechnung aus der Hydoxyzahl und dem über GPC ermittelten Molekulargewicht $M_n$ ermittelt werden.

Die "OH-Zahl" oder auch "Hydroxyl-Zahl" wird verwendet, um die reaktiven Äquivalente der Hydroxygruppen eines Polyols anzugeben und wird in [mg KOH/g Polyol] angegeben.

"Flammschutzmittel" sind Additive, welche einer Kunststoffzusammensetzung, beispielsweise einer Polyurethanzusammensetzung begemischt werden, und welche die Brennbarkeit dieser Zusammensetzung einschränken, verlangsamen oder verhindern sollen. Ein gängiges Verfahren zur Beurteilung und Klassifizierung der Brennbarkeit von Kunstoffen entspricht dem Standard UL 94 (Test for Flammability of Plastic Materials for Parts in Devices and Appliances).

Die "Topfzeit" einer Zusammensetzung bezeichnet die Zeitspanne, in der ein frisch zubereiteter Klebstoff noch verarbeitbar bleibt. Die Messung der Topfzeit kann über eine Viskositätsmessung erfolgen. Beispielsweise kann die Zeit, bis eine gemischte, zweikomponentige Polyurethanzusammensetzung insbesondere bei Raumtemperatur eine Viskosität von 500 Pa·s erreicht, als Topfzeit definiert werden.

Alle im Dokument erwähnten Industriestandards und Normen beziehen sich auf die zum Zeitpunkt der Einreichung der Erstanmeldung gültigen Fassungen, sofern nichts anderes angegeben ist.

Die erfindungsgemässe Polyurethanzusammensetzung besteht aus einer ersten Komponente **A** und einer zweiten Komponente **B,** welche erst bei der Applikation der Polyurethanzusammensetzung gemischt werden und vorher in getrennten Verpackungen aufbewahrt werden.

Polyol **P**

Als Polyole **P** können grundsätzlich alle handelsüblichen, für die Polyurethanherstellung geeigneten Polyole verwendet werden.

In einer bevorzugten Ausführungsform ist die Polyurethanzusammensetzung dadurch gekennzeichnet, dass das Polyol **P** eine mittlere OH-Funktionalität im Bereich von 2 bis 4 und/oder ein mittleres Molekulargewicht im Bereich von 250 bis 10'000 g/mol und/oder eine OH-Zahl im Bereich von 250 bis 600 mg KOH/g aufweist.

Das Polyol **P** weist in bevorzugten Ausführungsformen eine mittlere OH-Funktionalität im Bereich von 2 bis 4, insbesondere 2 bis 3.5, besonders bevorzugt 2 bis 3, am meisten bevorzugt 2 bis 2.5, auf.

Das Polyol **P** weist in bevorzugten Ausführungsformen ein mittleres Molekulargewicht im Bereich von 250 bis 10'000 g/mol, insbesondere 500 bis 5'000 g/mol, besonders bevorzugt 750 bis 3'500 g/mol, am meisten bevorzugt 1'000 bis 3'000 g/mol, auf.

Das Polyol **P** weist in bevorzugten Ausführungsformen eine Hydroxylzahl im Bereich von 25 bis 600 mg KOH/g, insbesondere 50 bis 500 mg KOH/g, besonders bevorzugt 50 bis 250 mg KOH/g, am meisten bevorzugt 50 bis 200 mg KOH/g, auf.

Besonders bevorzugt als Polyol **P** sind Polybutadienpolyole.

Bevorzugt als Polyol **P** sind Polybutadienpolyole mit einem mittleren Molekulargewicht im Bereich von 2'000 bis

10’000 g/mol und einer mittleren OH-Funktionalität im Bereich von 2 bis 4.

Das mittlere Molekulargewicht des Polybutadienpolyols liegt bevorzugt im Bereich von 2’000 bis 4’000 g/mol, insbesondere im Bereich von 2’500 bis 3’000 g/mol.

Die mittlere OH-Funktionalität des Polybutadienpolyols liegt bevorzugt im Bereich von 2.1 bis 2.9, insbesondere im Bereich von 2.3 bis 2.7.

Ein solches Polybutadienpolyol ist einfach erhältlich und weist eine vergleichsweise niedrige Viskosität auf, was eine gute Verarbeitbarkeit der Zusammensetzung ermöglicht.

Geeignete Polybutadienpolyole sind insbesondere erhältlich durch Polymerisation von 1,3-Butadien und Allylalkohol in einem geeigneten Verhältnis oder durch Oxidation von geeigneten Polybutadienen, sowie deren Hydrierungsprodukte.

Geeignete Polybutadienpolyole enthalten insbesondere Strukturelemente der Formel (I) und gegebenenfalls Strukturelemente der Formel (II) oder (III).

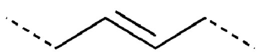
(I)

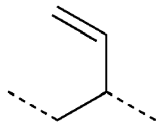
(II)

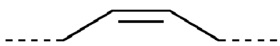
(III)

Ein bevorzugtes Polybutadienpolyol enthält

40 bis 80 Gew.-%, insbesondere 55 bis 65 Gew.-% des Strukturelements der Formel (I)
0 bis 30 Gew.-%, insbesondere 15 bis 25 Gew.-%, des Strukturelements der Formel (II),
0 bis 30 Gew.-%, insbesondere 15 bis 25 Gew.-%, des Strukturelements der Formel (III).

Ein besonders geeignetes Polybutadienpolyol ist PolyBD® R-45 HTLO oder PolyBD® R-45 M (beide von Cray Valley).

Weiterhin besonders geeignet als Polyole **P** sind Polycarbonatpolyole.

Als Polycarbonatpolyole sind insbesondere jene geeignet, wie sie beispielsweise durch Umsetzung beispielsweise der oben genannten, zum Aufbau der Polyesterpolyole eingesetzten, Alkohole mit Dialkylcarbonaten wie Dimethylcarbonat, Diarylcarbonaten wie Diphenylcarbonat oder Phosgen zugänglich sind. Ebenfalls geeignet sind Polycarbonate, die aus der Copolymerisation von $CO_2$ mit Epoxiden, wie Ethylenoxid und Propylenoxid, zugänglich sind.

Ein besonders geeignetes aliphatisches Polycarbonatpolyol basiert auf 3-Methyl-1 ,5-pentandiol und 1,6-Hexandiol und ist beispielsweise unter dem Handelsnamen Kuraray® C-2050 von der Firma Kuraray erhältlich.

Ein besonders geeignetes aliphatisches Polyestercarbonatpolyol basiert auf 1,6-Hexandiol und ε-Caprolacton ist unter dem Handelsnamen Desmophen® C 1200 von der Firma Bayer Material Science erhältlich.

Besonders bevorzugt als Polyol **P** sind Polyesterpolyole, insbesondere Dimerfettsäure-basierte Polyesterpolyole.

Besonders bevorzugt als Polyol **P** sind Dimerfettsäure-basierte Polyesterpolyole, welche aus Oleo-basierten (nachwachsenden) Rohstoffen gewonnen werden.

Bevorzugt ist ein solches Dimerfettsäure-basiertes Polyesterpolyol bei Raumtemperatur flüssig. Es weist insbesondere eine OH-Zahl im Bereich von 28 bis 120 mg KOH/g auf.

Solche Dimerfettsäure-basierte Polyester-Polyole weisen ein mittleres Molekulargewicht im Bereich von 950 bis 4’000 g/mol auf. Sie sind meist weitgehend linear aufgebaut und haben eine mittlere OH-Funktionalität von etwa 2, insbesondere zwischen 2 und 2.5.

Bevorzugt ist das Dimerfettsäure-basierte Polyester-Polyol amorph. Als Polyol **P** geeignete Dimerfettsäure-basierte Polyesterpolyole werden insbesondere erhalten aus der Veresterung von mindestens einer Dimerfettsäure und/oder mindestens einem Dimerfettalkohol mit einem Diol, wie beispielsweise Diethylenglykol oder Butandiol, und/oder einer Dicarbonsäure, wie beispielsweise Adipinsäure, bei einer solchen Stöchiometrie, dass das Produkt amorph und bei Raumtemperatur flüssig ist und eine OH-Zahl im Bereich von 28 bis 120 mg KOH/g aufweist.

Bevorzugt enthält das Dimerfettsäure-basierte Polyester-Polyol einen Gehalt an Kohlenstoff-Atomen aus erneuerbaren Quellen gemäss ASTM D6866 bezogen auf den totalen Kohlenstoffgehalt im Bereich von 50 bis 100 %, bevorzugt 60 bis 95 %, insbesondere 70 bis 90 %. Ein solches Polyesterpolyol ist amorph, hydrophob und besonders

gut verträglich in Polyurethan-Klebstoffen.

Bevorzugt weist das als Polyol **P** eingesetzte Dimerfettsäure-basierte Polyesterpolyol eine OH-Zahl im Bereich von 34 bis 120 mg KOH/g, insbesondere 52 bis 60 mg KOH/g, auf. Ein solches Dimerfettsäure-basiertes Polyesterpolyol hat ein mittleres Molekulargewicht im Bereich von 950 bis 3'300 g/mol, insbesondere im Bereich von 1'900 bis 2'200 g/mol. Ein solches Polymer ermöglicht Polyurethan-Zusammensetzungen mit einer besonders attraktiven Kombination aus guter Auspressbarkeit, guten Haftungseigenschaften und hoher Festigkeit.

Geeignet sind insbesondere kommerziell erhältliche amorphe Dimerfettsäure-basierte Polyesterpolyole, insbesondere die unter dem Handelsnamen Priplast® erhältlichen Typen Priplast® 1837, 1838, 3187, 3196, 3197, 3199 oder 3238 (von Croda). Davon bevorzugt ist Priplast® 1838. Weiterhin geeignet sind Solvermol® Typen (von BASF), insbesondere Solvermol® RC 1005 und Solvermol® 805.

Weiterhin als Polyol **P** geeignete Polyesterpolyole sind insbesondere Polyester, welche mindestens zwei Hydroxylgruppen tragen und nach bekannten Verfahren, insbesondere der Polykondensation von Hydroxycarbonsäuren oder der Polykondensation von aliphatischen und/oder aromatischen Polycarbonsäuren mit zwei- oder mehrwertigen Alkoholen, hergestellt werden.

Insbesondere geeignet sind Polyesterpolyole, welche hergestellt sind aus zweibis dreiwertigen Alkoholen wie beispielsweise 1,2-Ethandiol, Diethylenglykol, 1,2-Propandiol, Dipropylenglykol, oder Mischungen der vorgenannten Alkohole mit organischen Dicarbonsäuren oder deren Anhydriden oder Estern wie beispielsweise Bernsteinsäure, Glutarsäure, Adipinsäure, Trimethyladipinsäure, Maleinsäure, Fumarsäure, Phthalsäure, Phthalsäureanhydrid, Isophthalsäure, Terephthalsäure, Dimethylterephthalat, Hexahydrophthalsäure, Trimellithsäure und Trimellithsäureanhydrid oder Mischungen der vorgenannten Säuren, sowie Polyesterpolyole aus Lactonen wie beispielsweise ε-Caprolacton.

Geeignete Polyesterpolyole sind beispielsweise solche erhältlich unter dem Handelsnamen Kuraray® von Kuraray, insbesondere Kuraray® F-510, und solche erhältlich unter dem Handelsnamen K-Flex® von King Industries, insbesondere K-Flex® 188.

Besonders bevorzugte Polyetherpolyole umfassen Polyetherpolyole mit einer mindestens 4 C-Atomen aufweisenden Repetiereinheit zwischen zwei Ethersauerstoffen, beispielsweise ein Poly(propylenglykol)-Polyol oder ein Poly(tetramethylenglykol)-Polyol oder ein Poly(ethylenglykol)-Polyol oder ein Poly(butylenglykol)-Polyol. Besonders bevorzugt sind Mischungen dieser Polyetherpolyol, insbesondere Mischungen von Poly(propylenglykol)-Polyolen mit Poly(ethylenglykol)-Polyolen.

Geeignet als poly(butylenglykol)-Polyol ist insbesondere Adiansol® TO 470 erhältlich von Arkema.

Ebenfalls als Polyol **P** besonders geeignet sind so genannte Ethylenoxidterminierte ("EO-endcapped", ethylene oxide-endcapped) Polyoxypropylenpolyole. Letztere sind spezielle Polyoxypropylenpolyoxyethylenpolyole, die beispielsweise dadurch erhalten werden, dass reine Polyoxypropylenpolyole, insbesondere Polyoxypropylendiole und -triole, nach Abschluss der Polypropoxylierungsreaktion mit Ethylenoxid weiter alkoxyliert werden und dadurch primäre Hydroxylgruppen aufweisen. Bevorzugt sind in diesem Fall Polyoxypropylenpolyoxyethylendiole und Polyoxypropylenpolyoxyethylentriole.

Geeignete solche Polyether-basierte Polyole **P** sind beispielsweise erhältlich unter den Handelsnamen Acclaim® und Desmophen® von Covestro, insbesondere Acclaim® 4200, Desmophen® 5034, Desmophen® 1381 BT und Desmophen® 28HS98, unter dem Handelsnamen Voranol® von Dow, insbesondere Voranol® EP 1900 und Voranol® CP 4755, sowie unter dem Handelsnamen Dianol® von Arkema, insbesondere Dianol® 3130 HP.

Weiterhin geeignet als Polyol **P** sind Styrol-Acrylnitril gepfropfte Polyetherpolyole, wie sie beispielsweise unter dem Handelsnamen Lupranol® kommerziell erhältlich sind von der Firma Elastogran GmbH, Deutschland.

Ebenfalls geeignet sind als Polyol **P** sind weiterhin Polykohlenwasserstoffpolyole, auch Oligohydrocarbonole genannt, beispielsweise polyhydroxyfunktionelle Ethylen-Propylen-, Ethylen-Butylen- oder Ethylen-Propylen-Dien-Copolymere, wie sie beispielsweise von der Firma Kraton Polymers, USA, hergestellt werden, oder polyhydroxy-funktionelle Copolymere aus Dienen wie 1,3-Butandien oder Dien-Gemischen und Vinylmonomeren wie Styrol, Acrylnitril oder Isobutylen, oder polyhydroxyfunktionelle Polybutadienpolyole, beispielsweise solche, die durch Copolymerisation von 1,3-Butadien und Allylalkohol hergestellt werden und auch hydriert sein können.

Weiterhin geeignet als Polyol **P** sind polyhydroxyfunktionelle Acrylnitril/Butadien-Copolymere, wie sie beispielsweise aus Epoxiden oder Aminoalkoholen und carboxyl-terminierten Acrylnitril/Butadien-Copolymeren, welche kommerziell erhältlich sind unter dem Namen Hypro® (früher Hycar®) CTBN von der Firma Emerald Performance Materials, LLC, USA, hergestellt werden können.

In einer bevorzugten Ausführungsform ist die Polyurethanzusammensetzung dadurch gekennzeichnet, dass das Polyol **P** Polybutadienpolyole, Polycarbonatpolyole, Polyesterpolyole, Polyetherpolyole, Poly(meth)acrylatpolyole oder eine Mischung dieser Polyole umfasst.

Das Polyol **P** ist in einer weiteren bevorzugten Ausführungsform bevorzugt ein aliphatisches oder cycloaliphatisches Polyol mit einer mittleren OH-Funktionalität von zwischen 2 und 4, welches frei ist von aromatischen Bestandteilen.

Davon bevorzugt sind aliphatische oder cycloaliphatische Polyole, bevorzugt ein Polytetramethylenoxiddiol oder ein Polycarbonatdiol basierend auf 3-Methyl-1,5- pentandiol und 1,6-Hexandiol, oder ein Polyestercarbonatdiol

basierend auf 1,6-Hexandiol und ε-Caprolacton oder ein Polyesterdiol basierend auf 3-Methyl-1,5-pentandiol und Adipinsäure oder Sebacinsäure.

Ein besonders geeignetes Polyesterpolyol ist ein Kondensationsprodukt von 3-Methyl-1,5-pentandiol und Adipinsäure oder Sebacinsäure. Solche Polyesterpolyole sind beispielsweise unter dem Handelsnamen Kuraray® P-2010 von der Firma Kuraray erhältlich.

In einer bevorzugten Ausführungsform ist das Polyol **P** sowohl in der Komponente **A** wie auch in der Komponente **B** vorhanden.

Bevorzugterweise enthält die Komponente **A,** bezogen auf die gesamte Zusammensetzung der Komponente **A,** 10 bis 40 Gew.-%, besonders bevorzugt 15 bis 35 Gew.-%, ganz besonders bevorzugt 20 bis 30 Gew.-% des Polyols **P.**

Bevorzugterweise enthält die Komponente **B,** bezogen auf die gesamte Zusammensetzung der Komponente **B,** 25 bis 75 Gew.-%, besonders bevorzugt 30 bis 60 Gew.-%, ganz besonders bevorzugt 35 bis 55 Gew.-% des Polyols **P.**

<u>Diol **O**</u>

Das Diol O ist ein zweiwertiger Alkohol, insbesondere ein aliphatisches Diol oder ein über eine aliphatische Kette verbrücktes Diol. Das Diol **O** weist ein mittleres Molekulargewicht von weniger als 250 g/mol, bevorzugt maximal 200 g/mol, besonders bevorzugt maximal 150 g/mol, auf.

In einer bevorzugten Ausführungsform ist die Polyurethanzusammensetzung dadurch gekennzeichnet, dass das Diol **O** ein lineares aliphatisches Diol mit zwei primären Hydroxylgruppen ist, die über eine C2- bis C9-Kohlenstoffkette verbunden sind, insbesondere ausgewählt aus der Gruppe bestehend aus 1,4-Butandiol 1,5-Pentandiol, 1,6-Hexandiol, 1,7-Heptandiol, 1,8-Octandiol und 1,9-Nonandiol.

Geeignet als Diol **O** sind lineare oder verzweigte Alkylendiole mit zwei primären oder sekundären Hydroxylgruppen, Alkylendiole mit einer primären und einer sekundären Hydroxylgruppe sowie cycloaliphatische Diole.

Bevorzugt ist das Diol O ein lineares aliphatisches Diol mit zwei primären Hydroxylgruppen, die über eine C4- bis C9-Kohlenstoffkette verbunden sind. Ein solches Diol hat den Vorteil, dass Polyurethane mit besonders hohen E-Modulen im Bereich niedriger Dehnung, beispielsweise zwischen 0 und 5%, erhalten werden, was insbesondere für Strukturklebstoffe vorteilhaft ist.

Insbesondere ist das Diol **O** ausgewählt aus der Gruppe bestehend aus Ethylenglykol, 1,3-Propandiol, 1,4-Butandiol, 1,5-Pentandiol, 1,6-Hexandiol, 1,7-Heptandiol, 1,8-Octandiol, 1,9-Nonandiol, 1,3-Butandiol, 2,3-Butandiol, 2-Methyl-1,3-propandiol, 1,2-Pentandiol, 2,4-Pentandiol, 2-Methyl-1,4-butandiol, 2,2-Dimethyl-1,3-propandiol (Neopentylglykol), 1,2-Hexandiol, 1,4-Butandiol, 3-Methyl-1,5-pentandiol, 1,2-Octandiol, 3,6-Octandiol, 2-Ethyl-1,3-hexandiol, 2,2,4-Trimethyl-1,3-pentandiol, 2-Butyl-2-ethyl-1,3-propandiol, 2,7-Dimethyl-3,6-octandiol, 1,4-Cyclohexandiol, 1,3-Cyclohexandimethanol und 1,4-Cyclohexandimethanol.

Ebenfalls geeignet als Diol **O** sind weitere niedermolekulare zweiwertige Alkohole wie beispielsweise Diethylenglykol, Triethylenglykol, die isomeren Dipropylenglykole und Tripropylenglykole, die isomeren Decandiole und Undecandiole, hydriertes Bisphenol A, dimere Fettalkohole, 1,1,1-Trimethylolethan, 1,1,1-Trimethylolpropan, Glycerin, Pentaerythrit, Zuckeralkohole wie Xylit, Sorbit oder Mannit, sowie Mischungen der vorgenannten Alkohole mitverwendet werden. Weiterhin können auch Diole, die andere Heteroatome enthalten, wie beispielsweise Methyldiethanolamin oder Thiodiglykol als Diol **O** geeignet sein.

Besonders bevorzugt ist das Diol **O** ausgewählt aus der Gruppe bestehend aus 1,4-Butandiol, 1,5-Pentandiol, 1,6-Hexandiol, 1,7-Heptandiol, 1,8-Octandiol und 1,9-Nonandiol.

Am meisten bevorzugt ist das Diol **O** ausgewählt aus der Gruppe bestehend aus 1,4-Butandiol, 1,5-Pentandiol, 1,6-Hexandiol und 1,9-Nonandiol. Diese Diole sind kommerziell gut zugänglich und ermöglichen Polyurethane mit besonders hohen E-Moduln bei geringer Dehnung nach der Aushärtung.

In einer bevorzugten Ausführungsform ist das Diol **O** in der Komponente **A** vorhanden.

Bevorzugterweise enthält die Komponente **A,** bezogen auf die gesamte Zusammensetzung der Komponente **A,** 1 bis 5 Gew.-%, besonders bevorzugt 1.5 bis 4.5 Gew.-%, ganz besonders bevorzugt 2 bis 4 Gew.-% des Diols **O.**

<u>Verbindung **T**</u>

Die erste Komponente A enthält weiterhin mindestens eine Verbindung **T,** die mindestens eine Thiolgruppe aufweist. Geeignet sind alle Verbindungen, die mindestens eine Thiolgruppe aufweisen und die sich in der erfindungsgemässen Zusammensetzung einformulieren lassen. Als Thiolgruppe wird hier eine -SH Gruppe verstanden, die an einen organischen Rest, beispielsweise einen aliphatischen, cycloaliphatischen oder aromatischen Kohlenstoffrest, gebunden ist.

Bevorzugt sind Verbindungen mit 1 bis 6, insbesondere 1 bis 4, am meisten bevorzugt 1 oder 2 Thiolgruppen. Verbindungen mit einer Thiolgruppe haben den Vorteil, dass keine tendenziell schwerlöslichen Komplexe mit dem Metallkatalysator **K** entstehen und die Topfzeit besonders genau eingestellt werden kann. Verbindungen mit zwei

Thiolgruppen haben den Vorteil, dass die mechanischen Eigenschaften der Zusammensetzung nach dem Aushärten verbessert werden.

In einer bevorzugten Ausführungsform ist die Polyurethanzusammensetzung dadurch gekennzeichnet, dass die Verbindung **T,** die mindestens eine Thiolgruppe aufweist, eine Verbindung mit 1 bis 6 Thiolgruppen umfasst.

Geeignete Verbindungen **T** mit einer Thiolgruppe sind beispielsweise 3-Mercaptopropyltrimethoxysilan, 3-Mercaptopropyltriethoxysilan, 3-Mercapto-1,2-propandiol, 2-Mercaptotoluimidazol oder 2-Mercaptobenzothiazol.

Besonders bevorzugt als Verbindungen **T** mit einer Thiolgruppe sind insbesondere Mercaptosilane.

Geeignete Verbindungen **T** mit mehr als einer Thiolgruppe sind beispielsweise Ethylenglykol-di(3-mercaptopropionat), Ethylenglykol-dimercaptoacetat, Dipentaerythritol-hexa(3-mercaptopropionat), 2,3-Dimercapto-1,3,4-thiadiazol oder Pentaerythritol-tetrakis(3-mercaptopropionat).

In einer bevorzugten Ausführungsform ist die Polyurethanzusammensetzung dadurch gekennzeichnet, dass die Verbindung **T,** die mindestens eine Thiolgruppe aufweist, ausgewählt ist aus der Gruppe bestehend aus Ethylenglykol-di(3-mercaptopropionat), Ethylenglykol-dimercaptoacetat, Dipentaerythritol-hexa(3-mercaptopropionat) und 3-Mercaptopropyltrimethoxysilan.

Die Menge an Verbindung **T** in der ersten Komponente **A** liegt bevorzugt im Bereich von 0.1 bis 5 Gew.-%, bevorzugt 0.2 bis 2.5 Gew.-%, insbesondere 0.25 bis 1.0 Gew.-%, bezogen auf die Komponente **A.**

Die Menge an Verbindung **T,** bezogen auf die gesamte Polyurethanzusammensetzung, liegt bevorzugt im Bereich von 0.04 bis 2.0 Gew.-%, bevorzugt 0.08 bis 1.0 Gew.-%, insbesondere 0.1 bis 0.4 Gew.-%, bezogen auf die gesamte Polyurethanzusammensetzung.

<u>Polyisocyanat I</u>

Die zweite Komponente **B** enthält mindestens ein Polyisocyanat **I.**

Als Polyisocyanate **I** für die Herstellung des Polyurethanpolymers in der erfindungsgemässen Zusammensetzung können alle handelsüblichen, für die Polyurethanherstellung geeigneten Polyisocyanate, insbesondere Diisocyanate, verwendet werden.

In einer bevorzugten Ausführungsform ist die Polyurethanzusammensetzung dadurch gekennzeichnet, dass das Polyisocyanat **I** eine bei Raumtemperatur flüssige Form von 4,4'-, 2,4'- oder 2,2'-Diphenylmethandiisocyanat und beliebige Gemische dieser Isomeren (MDI) in Form von polymerem MDI oder MDI mit Anteilen von Oligomeren oder Derivaten, insbesondere Carbodiimiden, ist.

Geeignete Polyisocyanate sind insbesondere monomere Di- oder Triisocyanate, sowie Oligomere, Polymere und Derivate der monomeren Di- oder Triisocyanate, sowie beliebige Mischungen davon.

Geeignete aromatische monomere Di- oder Triisocyanate sind insbesondere 2,4- und 2,6-Toluylendiisocyanat und beliebige Gemische dieser Isomeren (TDI), 4,4'-, 2,4'- und 2,2'-Diphenylmethandiisocyanat und beliebige Gemische dieser Isomeren (MDI), Gemische aus MDI und MDI-Homologen (polymeres MDI oder PMDI), 1,3- und 1,4-Phenylendiisocyanat, 2,3,5,6-Tetramethyl-1,4-diisocyanatobenzol, Naphthalin-1,5-diisocyanat (NDI), 3,3'-Dimethyl-4,4'-diisocyanatodiphenyl (TODI), Dianisidindiisocyanat (DADI), 1,3,5-Tris-(isocyanatomethyl)benzol, Tris-(4-isocyanatophenyl)methan und Tris-(4-isocyanatophenyl)thiophosphat.

Geeignete aliphatische monomere Di- oder Triisocyanate sind insbesondere 1,4-Tetramethylendiisocyanat, 2-Methylpentamethylen-1,5-diisocyanat, 1,6-Hexamethylendiisocyanat (HDI), 2,2,4- und 2,4,4-Trimethyl-1,6-hexamethylendiisocyanat (TMDI), 1,10-Decamethylendiisocyanat, 1,12-Dodecamethylendiisocyanat, Lysin- und Lysinesterdiisocyanat, Cyclohexan-1,3- und -1,4-diisocyanat, 1-Methyl-2,4- und -2,6-diisocyanatocyclohexan und beliebige Gemische dieser Isomeren (HTDI oder $H_6$TDI), 1-Isocyanato-3,3,5-trimethyl-5-isocyanatomethyl-cyclohexan (=Isophorondiisocyanat oder IPDI), Perhydro-2,4'- und -4,4'-diphenylmethandiisocyanat (HMDI oder $H_{12}$MDI), 1,4-Diisocyanato-2,2,6-trimethylcyclohexan (TMCDI), 1,3- und 1,4-Bis-(isocyanatomethyl)cyclohexan, m- und p-Xylylendiisocyanat (m- und p-XDI), m- und p-Tetramethyl-1,3- und -1,4-xylylendiisocyanat (m- und p-TMXDI), Bis-(1-Isocyanato-1-methyl-ethyl)naphthalin, Dimer- und Trimerfettsäureisocyanate wie 3,6-Bis-(9-isocya-natononyl)-4,5-di-(1-heptenyl)cyclohexen (Dimeryldiisocyanat) und $\alpha,\alpha,\alpha',\alpha',\alpha'',\alpha''$-Hexamethyl-1,3,5-mesitylentriisocyanat. Davon bevorzugt sind MDI, TDI, HDI und IPDI.

Geeignete Oligomere, Polymere und Derivate der genannten monomeren Di- und Triisocyanate sind insbesondere abgeleitet von MDI, TDI, HDI und IPDI. Davon insbesondere geeignet sind kommerziell erhältliche Typen, insbesondere HDI-Biurete wie Desmodur® N 100 und N 3200 (von Covestro), Tolonate® HDB und HDB-LV (von Vencorex) und Duranate® 24A-100 (von Asahi Kasei); HDI-Isocyanurate, wie Desmodur® N 3300, N 3600 und N 3790 BA (alle von Covestro), Tolonate® HDT, HDT-LV und HDT-LV2 (von Vencorex), Duranate® TPA-100 und THA-100 (von Asahi Kasei) und Coronate® HX (von Nippon Polyurethane); HDI-Uretdione wie Desmodur® N 3400 (von Covestro); HDI-Iminooxadiazindione wie Desmodur® XP 2410 (von Covestro); HDI-Allophanate wie Desmodur® VP LS 2102 (von Covestro); IPDI-Isocyanurate, wie beispielsweise in Lösung als Desmodur® Z 4470 (von Covestro) oder in fester Form als Vestanat® T1890/ 100 (von Evonik); TDI-Oligomere wie Desmodur® IL (von Covestro); sowie gemischte Isocyanurate auf Basis

TDI/HDI, zum Beispiel als Desmodur® HL (von Covestro).

Weiterhin insbesondere geeignet sind bei Raumtemperatur flüssige Formen von MDI (sogenanntes "modifiziertes MDI"), welche Gemische von MDI mit MDI-Derivaten, wie insbesondere MDI-Carbodiimiden oder MDI-Uretoniminen oder MDI-Urethanen darstellen, bekannt unter Handelsnamen wie Desmodur® CD, Desmodur® PF, Desmodur® PC (alle von Covestro) oder Isonate® M 143 (von Dow), sowie Gemische aus MDI und MDI-Homologen (polymeres MDI oder PMDI), erhältlich unter Handelsnamen wie Desmodur® VL, Desmodur® VL50, Desmodur® VL R10, Desmodur® VL R20, Desmodur® VH 20 N und Desmodur® VKS 20F (alle von Covestro), Isonate® M 309, Voranate® M 229 und Voranate® M 580 (alle von Dow) oder Lupranat® M 10 R (von BASF). Die vorgenannten oligomeren Polyisocyanate stellen in der Praxis üblicherweise Gemische von Substanzen mit unterschiedlichen Oligomerisierungsgraden und/oder chemischen Strukturen dar. Vorzugsweise weisen sie eine mittlere NCO-Funktionalität von 2.1 bis 4.0 auf.

Bevorzugt ist das Polyisocyanat ausgewählt aus der Gruppe bestehend aus MDI, TDI, HDI und IPDI und Oligomeren, Polymeren und Derivaten der genannten Isocyanate, sowie Mischungen davon.

Bevorzugt enthält das Polyisocyanat Isocyanurat-, Iminooxadiazindion-, Uretdion-, Biuret-, Allophanat-, Carbodiimid-, Uretonimin- oder Oxadiazintrion-Gruppen.

Besonders bevorzugt als Polyisocyanat sind bei Raumtemperatur flüssige Formen von MDI. Dies sind insbesondere sogenannt polymeres MDI sowie MDI mit Anteilen von Oligomeren oder Derivaten davon. Der Gehalt an MDI (=4,4'-, 2,4'- oder 2,2'-Diphenylmethandiisocyanat und beliebige Gemische dieser Isomeren) solcher flüssiger Formen von MDI beträgt insbesondere 50 bis 95 Gew.-%, insbesondere 60 bis 90 Gew.-%.

Insbesondere bevorzugt als Polyisocyanat ist polymeres MDI und bei Raumtemperatur flüssige MDI-Typen, welche Anteile von MDI-Carbodiimiden oder deren Addukte enthalten. Mit diesen Polyisocyanaten werden besonders gute Verarbeitungseigenschaften und besonders hohe Festigkeiten erhalten.

Das Polyisocyanat der zweiten Komponente B kann Anteile von Isocyanatgruppen aufweisenden Polyurethanpolymeren enthalten. Entweder kann die zweite Komponente ein separat hergestelltes Isocyanatgruppen aufweisendes Polyurethanpolymer umfassen, oder das Polyisocyanat wurde mit mindestens einem Polyol, insbesondere einem Polyetherpolyol, vermischt, wobei die Isocyanatgruppen gegenüber den OH-Gruppen in einem stöchiometrischen Überschuss vorliegen.

In der der zweiten Komponente B der erfindungsgemässen Zusammensetzung ist Polyisocyanat I bevorzugt in einer Menge von 15 Gew.-% bis 70 Gew.-%, insbesondere 20 Gew.-% bis 65 Gew.-%, besonders bevorzugt 25 Gew.-% bis 60 Gew.-%, bezogen auf die zweite Komponente **B,** vorhanden.

Die Polyurethanzusammensetzung enthält bevorzugt so viel an Polyisocyanat **I,** dass mindestens 5 Gew.-%, insbesondere mindestens 6 Gew.-%, bevorzugt mindestens 7.5 Gew.-%, bezogen auf die gesamte Polyurethanzusammensetzung, an Polyisocyanat I enthalten ist.

<u>Metallkatalysator **K**</u>

Die erste Komponente **A** und/oder die zweite Komponente **B** enthält weiterhin mindestens einen Metallkatalysator **K** für die Reaktion von Hydroxylgruppen und Isocyanatgruppen, der Thiokomplexe bilden kann. Als Metallkatalysator **K** sind somit alle Metallkatalysatoren geeignet, welche in der Polyurethanchemie als Vernetzungskatalysator eingesetzt werden können und gleichzeitig in Gegenwart von Thiolen mit diesen Thiokomplexe bilden können.

Geeignete Katalysatoren sind beispielsweise Bismut-, Zink-, Zinn- oder Zirkoniumverbindungen, was Komplexe und Salze dieser Metalle einschliesst.

Bevorzugt umfasst der Metallkatalysator **K** eine Bismut-Verbindung, insbesondere eine Bismut(III)-Verbindung. Eine Bismut-Verbindung hat den Vorteil, dass sie, neben den erwünschten Eigenschaften als Katalysator und Thiokomplex-Bildner, eine geringe Akuttoxizität besitzt.

Als Bismut-Verbindung kann eine Vielzahl von herkömmlichen Bismut-Katalysatoren verwendet werden. Dabei handelt es sich beispielsweise um Bismutcarboxylate wie z.B. Bismut-Acetat, -Oleat, -Octoat oder-Neodecanoat, Bismutnitrat, Bismuthalogenide wie z.B. Bromid, Chlorid, Iodid, Bismutsulfid, basische Bismutcarboxylate wie z.B. Bismutyl-neodecanoat, Bismut-subgallat oder Bismut-subsalicylat, sowie Gemische davon.

In einer bevorzugten Ausführungsform ist die Polyurethanzusammensetzung dadurch gekennzeichnet, dass der Metallkatalysator **K** eine Zinn(IV)-Verbindung und/oder eine Bismut(III)-Verbindung, umfasst.

In einer bevorzugten Ausführungsform ist die Polyurethanzusammensetzung dadurch gekennzeichnet, dass der Metallkatalysator Liganden umfasst, ausgewählt ist aus der Gruppe bestehend aus Alkylliganden, Carboxylatliganden, Hydroxychinolinliganden und/oder 1,3-Ketoamidliganden.

In einer bevorzugten Ausführungsform ist der Metallkatalysator **K** ein Bismut(III)-Komplex, der mindestens einen Liganden auf 8-Hydroxychinolinbasis aufweist. Solche Komplexe sind beschrieben in der EP1551895. Bevorzugt handelt es sich dabei um ein Bismut(III)-Carboxylat, das ein Moläquivalent eines 8-Hydroxychinolinliganden aufweist.

In einer weiteren bevorzugten Ausführungsform ist der Metallkatalysator K ein Bismut(III)-Komplex, der mindestens einen Liganden auf 1,3-Ketoamidbasis aufweist. Solche Komplexe sind beschrieben in der EP2791153. Bevorzugt

handelt es sich dabei um ein Bismut(III)-Carboxylat, das 1 bis 3 Moläquivalente eines 1,3-Ketoamidliganden aufweist.

In einer bevorzugten Ausführungsform ist die Polyurethanzusammensetzung dadurch gekennzeichnet, dass der Metallkatalysator **K** in der ersten Komponente **A** enthalten ist.

Bevorzugt ist der Metallkatalysator **K** nur in der ersten Komponente **A** enthalten. Dies hat den Vorteil, dass eine bessere Lagerstabilität erreicht wird. Die Menge an Metallkatalysator **K** in dieser Ausführungsform in der ersten Komponente **A** liegt bevorzugt im Bereich von 0.01 bis 2.5 Gew.-%, bevorzugt 0.1 bis 2.0 Gew.-%, insbesondere 0.2 bis 1.5 Gew.-%, besonders bevorzugt 0.25 bis 1.0 Gew.-%, bezogen auf die erste Komponente **A.**

Falls der Katalysator in der zweiten Komponente **B** vorliegt, gelten dieselben bevorzugten Mengenbereiche wie eben beschrieben, aber bezogen auf die Komponente **B.**

Die Menge an Metallkatalysator **K,** bezogen auf die gesamte Polyurethanzusammensetzung, liegt bevorzugt im Bereich von 0.02 bis 1.0 Gew.-%, bevorzugt 0.025 bis 0.8 Gew.-%, insbesondere 0.08 bis 0.6 Gew.-%, besonders bevorzugt 0.1 bis 0.5 Gew.-%, bezogen auf die gesamte Polyurethanzusammensetzung.

In einer bevorzugten Ausführungsform ist die Polyurethanzusammensetzung dadurch gekennzeichnet, dass das molare Verhältnis aller Thiolgruppen der mindestens eine Verbindung **T** zu allen Metallatomen des Metallkatalysators **K** zwischen 1:1 und 250:1, bevorzugt zwischen 2:1 and 150:1, insbesondere zwischen 5:1 und 100:1.

Durch dieses Mengenverhältnis kann die Topfzeit eingestellt werden, und zwar innerhalb der intrinsischen Grenzen der jeweiligen Zusammensetzung, bedingt beispielsweise durch den Gehalt an Katalysator, die Reaktivität der enthaltenen Isocyanate und deren Menge. Dabei ist die untere Grenze der Topfzeit diejenige Topfzeit, die in einer gegebenen Zusammensetzung bei Verwendung einer bestimmten Katalysatormenge ohne Zusatz der Verbindung **T** erhalten wird.

Die obere Grenze der einstellbaren Topfzeit ist dementsprechend diejenige Topfzeit, die ohne Verwendung eines Katalysators bedingt durch die unkatalysierte Isocyanat-Hydroxylreaktion erreicht werden würde. Diese Reaktion beginnt auch ohne Verwendung eines Katalysators irgendwann nach dem Mischen der beiden Komponenten anzulaufen. Allerdings läuft die Reaktion ohne Katalysator langsamer und unter Ausbildung minderwertiger mechanischer Eigenschaften des gehärteten Materials ab.

Der wesentliche Vorteil, der durch die erfindungsgemässe zweikomponentige Polyurethanzusammensetzung erreicht wird, ist ein ausserordentlich rasch aushärtendes und Festigkeit aufbauendes System, das aber gleichzeitig eine ausreichend lange Topfzeit aufweist, um anwenderfreundlich verarbeitet werden zu können. Somit können beispielsweise strukturelle Verklebungen auch an grösseren Substraten durchgeführt werden, die sehr kurz nach der Applikation des Klebstoffs bereits mechanisch belastet werden können. Dies führt beispielsweise zu einer signifikanten Verkürzung von Taktzeiten in der industriellen Fertigung. Ein weiterer Vorteil der erfindungsgemässen Polyurethanzusammensetzungen ist die Möglichkeit, die Topfzeit wie oben beschrieben einstellen zu können. Dies ist insbesondere für automatisierte Anwendungen sehr vorteilhaft und kann beispielsweise eine weitere Optimierung der Taktzeiten in der industriellen Fertigung ermöglichen, da die Topfzeit auf die gewünschte Anwendung eingestellt werden kann.

Flammschutzmittel **F**

Die erfindungsgemässe Zusammensetzung enthält mindestens ein Flammschutzmittel **F.** Als Flammschutzmittel **F** eignen sich feste oder flüssige Flammschutzmittel.

In einer bevorzugten Ausführungsform ist die Polyurethanzusammensetzung dadurch gekennzeichnet, dass das Flammschutzmittel **F** unter Normbedingungen fest ist.

Bevorzugt sind insbesondere Flammschutzmittel **F** auf Phosphor-Basis, insbesondere phosphororganische Verbindungen wie organische Phosphorsäureester wie insbesondere Triethylphosphat, Trikresylphosphat, Triphenylphosphat, Diphenylkresylphosphat, Isodecyldiphenylphosphat, Tris(1,3-dichlor-2-propyl)phosphat, Tris(2-Chlorethyl)-phosphat, Tris(2-Ethylhexyl)-phosphat, Tris(Chlorisopropyl)-phosphat, Tris(Chlorpropyl)-phosphat, isopropyliertes Triphenylphosphat, Mono-, Bis- oder Tris(Isopropylphenyl)-phosphate unterschiedlichen Isopropylierungsgrades, Resorcin-Bis(diphenylphosphat), Bisphenol-A-Bis(diphenylphosphat) oder Ammoniumpolyphosphate.

Bevorzugt werden Trialkyl- und/oder Triarylphosphat-Flammschutzmittel **F** wie Tris-(2-ethylhexyl)-phosphat (von Lanxess unter dem Handelsnamen Disflamoll® TOF vertrieben), Kresyldiphenylphosphat, Trikresylphosphat und Triphenylphosphat (alle von Lanxess unter dem Handelsnamen Disflamoll® vertrieben).

Besonders bevorzugt werden aliphatische Phosphoramidate, welche insbesondere unter Normbedingungen als Feststoff vorliegen. Besonders bevorzugt sind aliphatische Phosphoramidate wie N,N'-bis(5,5-dimethyl-1,3,2-dioxaphosphinane-2-oxide-2-yl)ethane-1,2-diamine (beispielsweise von Daihachi Chemical unter dem Handelsnamen Daiguard-850 vertrieben) oder feinkörniges Ammoniumpolyphosphat (beispielsweise von Clariant unter dem Handelsnamen Exolit® AP 422 vertrieben).

Ebenfalls geeignet als Flammschutzmittel **F** sind flammhemmende Füllstoffe wie unter Hitze Wasser abspaltende Hydroxide oder Hydrate, insbesondere Hydroxide oder Hydrate von Aluminium, beispielsweise, Aluminiumhydroxide und/oder Magnesiumhydroxide sowie Bornitrid. Besonders bevorzugt sind Aluminiumhydroxide wie gefälltes

Aluminiumhydroxid (beispielsweise von Huber Advanced Materials unter dem Handelsnamen Martinal OL-104 LEO vertrieben).

In einer bevorzugten Ausführungsform ist die Polyurethanzusammensetzung dadurch gekennzeichnet, dass das Flammschutzmittel **F eine** phosphororganische Verbindung, insbesondere Phosphoramidate und/oder Phosphate, Methallhydroxide, insbesondere Aluminiumhydroxide, umfasst.

Die erfindungsgemässe Zusammensetzung enthält mindestens 10 Gew.-%, bezogen auf die gesamte Polyurethanzusammensetzung, eines Flammschutzmittels **F.** In besonders bevorzugten Ausführungsformen enthält die erfindungsgemässe Zusammensetzung mindestens 15 Gew.-%, besonders bevorzugt mindestens 20 Gew.-%, ganz besonders bevorzugt 30 Gew.-%, bezogen auf die gesamte Polyurethanzusammensetzung, eines Flammschutzmittels **F.**

In einer besonders bevorzugten Ausführungsform ist die Polyurethanzusammensetzung dadurch gekennzeichnet, dass das Flammschutzmittel **F** eine Kombination von aliphatischem Phosphoramidat, vorzugsweise in einem Bereich von 5 bis 20 Gew.-%, feinkörnigem Ammoniumpolyphosphat, vorzugsweise in einem Bereich von 10 bis 30 Gew.%, und gefälltem Aluminiumhydroxid, vorzugsweise in einem Bereich von 20 bis 60 Gew.-%, alle bezogen auf die erste Komponente **A,** umfasst.

Die erfindungsgemässe Zusammensetzung enthält bevorzugt in der Komponente **A** zwischen 15 und 80 Gew.-%, vorzugsweise zwischen 20 und 65 Gew.-%, insbesondere zwischen 30 und 60 Gew.-%, bezogen auf die Gesamtzusammensetzung, mindestens eines Flammschutzmittels **F.**

<u>Additive</u>

Die Polyurethanzusammensetzung kann neben den bereits erwähnten Bestandteilen weitere Additive, wie sie der Fachmann aus der Zweikomponenten-Polyurethanchemie her kennt, enthalten. Diese können in nur einer Komponente oder in beiden vorhanden sein.

In einer bevorzugten Ausführungsform ist die Polyurethanzusammensetzung dadurch gekennzeichnet, dass die Polyurethanzusammensetzung zusätzlich mindestens eine Verbindung ausgewählt aus der Liste von Lösungsmitteln, Weichmachern, Füllstoffen und Stabilisatoren, enthält.

Als Additive bevorzugt sind anorganische und organische Füllstoffe **FS,** wie insbesondere natürliche, gemahlene oder gefällte Calciumcarbonate (Kreide), welche gegebenenfalls mit Fettsäuren, insbesondere Stearinsäure, beschichtet sind, Baryt (Schwerspat), Talke, Quarzmehle, Quarzsand, Dolomite, Wollastonite, Kaoline, calcinierte Kaoline, Mica (Kalium-Aluminium-Silikat), Molekularsiebe, Kieselsäuren, industriell hergestellte Russe, Graphit, Metallpulver wie Aluminium, Kupfer, Eisen, Silber oder Stahl, PVC-Pulver oder Hohlkugeln.

Es ist kann von Vorteil sein, eine Mischung verschiedener Füllstoffe **FS** einzusetzen. Am meisten bevorzugt sind Kombinationen von gemahlenen Calciumcarbonaten oder calcinierten Kaolinen und Russ.

Bevorzugt enthält die erfindungsgemässe Zusammensetzung keinen Füllstoff **FS,** abgesehen von allfälligen flammhemmenden Füllstoffen, die unter das Flammschutzmittel F gelesen werden.

Der Gehalt an Füllstoff **FS** in der Zusammensetzung liegt bevorzugt im Bereich von 0 bis 40 Gew.-%, insbesondere 0 bis 35 Gew.-%, besonders bevorzugt 0 bis 30 Gew.-%, bezogen auf die gesamte Zusammensetzung.

Der Gehalt an Füllstoff **FS** in der ersten Komponente **A** liegt bevorzugt im 0 bis 50 Gew.-%, bevorzugt 0 bis 40 Gew.-%, insbesondere 0 bis 30 Gew.-%, Füllstoff **FS,** bezogen auf die Komponente **A.**

Der Gehalt an Füllstoff **FS** in der zweiten Komponente **B** liegt bevorzugt im Bereich von 0 bis 50 Gew.-%, bevorzugt 0 bis 40 Gew.-%, insbesondere 0 bis 30 Gew.-%, Füllstoff **FS,** bezogen auf die zweite Komponente **B.**

Als weitere Bestandteile können weiterhin insbesondere Lösungsmittel **LM,** wie beispielsweise Polyetherglykol (vertrieben von Arkema unter dem Handelsnamen Ensoline PHP) verwendet werden.

Als weitere Bestandteile können weiterhin insbesondere Weichmacher **WM,** wie beispielsweise Rizinusöl, verwendet werden

Als weitere Additive können weiterhin insbesondere Extender, Pigmente, Rheologiemodifizierer wie insbesondere amorphe Kieselsäuren, Trocknungsmittel wie insbesondere Zeolithe, Haftvermittler wie insbesondere organofunktionelle Trialkoxysilane, Stabilisatoren gegen Oxidation, Wärme, Licht- und UV-Strahlung, sowie oberflächenaktive Substanzen, insbesondere Netzmittel und Entschäumer, vorhanden sein.

Als bevorzugte Rheologiemodifizierer können amorphe Kieselsäuren, insbesondere hochdisperse Kieselsäuren aus Pyrolyseprozessen, insbesondere pyrogene Siliciumdioxid (fumed silica), das mit Polysiloxanen behandelt wurde (von Evonik unter dem Handelsnamen Aerosil® 202 vertrieben) vorhanden sein.

Als bevorzugte Stabilisatoren können primäre phenolische AntiOxidationsmittel und Hitzestabilisatoren (von BASF unter dem Handelsnamen Irganox 1035 vertrieben) und phenolische Benzotriazole als UV-Absorber (von BASF unter dem Handelsnamen Tinuvin 928 vertrieben) vorhanden sein.

In einer bevorzugten Ausführungsform ist die Polyurethanzusammensetzung, dadurch gekennzeichnet, dass die erste Komponente **A** jeweils bezogen auf die gesamte Zusammensetzung der Komponente **A**

- 10 bis 40 Gew.-% Polyol **P;**
- 1 bis 5 Gew.-% Diol **O;**
- 0.1 bis 5 Gew.-% Verbindung **T;**
- 0.01 bis 2.5 Gew.-% Metallkatalysator **K;**
- 15 bis 80 Gew.-% Flammschutzmittel **F;**
- 0 bis 8 Gew.-% Lösungsmittel **LM;**
- 0 bis 10 Gew.-% Weichmacher **WM;**
- 0 bis 40 Gew.-% Füllstoff **FS;**

Und dass die zweite Komponente **B** jeweils bezogen auf die gesamte Zusammensetzung der Komponente **B**

- 25 bis 75 Gew.-% Polyol **P;**
- 15 bis 70 Gew.-% Polyisocyanat **I;**
- 0 bis 6 Gew.-% Haftvermittler **HV;**
- 0 bis 40 Gew.-% Füllstoff **FS** enthält,

sowie gegebenenfalls weitere Bestandteile enthält.

Die erste Komponente **A** und die zweite Komponente **B** werden vorteilhaft so formuliert, dass ihr Mischungsverhältnis in Volumenteilen oder Gewichtsteilen im Bereich von 10:1 bis 1:10, bevorzugt 5:1 bis 1:5, insbesondere 2:1 bis 1:2, liegt.

In der vermischten Polyurethanzusammensetzung liegt das Verhältnis zwischen der Anzahl Isocyanatgruppen und der Anzahl gegenüber Isocyanaten reaktiven Gruppen vor der Aushärtung vorzugsweise ungefähr im Bereich von 1.2 bis 1, bevorzugt 1.15 bis 1.05. Es ist aber auch möglich, wenn auch meist nicht bevorzugt, dass ein unterstöchiometrischer Anteil an Isocyanatgruppen gegenüber Isocyanaten reaktiven Gruppen vorliegt.

Die Herstellung der beiden Komponenten **A** und **B** erfolgt getrennt voneinander und vorzugsweise unter Ausschluss von Feuchtigkeit. Beide Komponenten werden typischerweise jeweils in einem eigenen Gebinde gelagert. Ein geeignetes Gebinde zum Lagern der jeweiligen Komponente ist insbesondere ein Fass, ein Hobbock, ein Beutel, ein Eimer, eine Büchse, eine Kartusche oder eine Tube. Die Komponenten sind beide lagerstabil, das heisst, dass sie vor ihrer Anwendung während mehreren Monaten bis zu einem Jahr und länger aufbewahrt werden können, ohne dass sie sich in ihren jeweiligen Eigenschaften in einem für ihren Gebrauch relevanten Ausmass verändern.

Die beiden Komponenten werden vor dem Vermischen der Zusammensetzung getrennt voneinander gelagert und erst bei oder unmittelbar vor der Anwendung miteinander vermischt. Sie sind vorteilhaft in einer Verpackung, welche aus zwei voneinander getrennten Kammern besteht, vorhanden.

In einem weiteren Aspekt umfasst die Erfindung eine Packung bestehend aus einer Verpackung mit zwei voneinander getrennten Kammern, welche jeweils die erste Komponente **A** beziehungsweise die zweite Komponente **B** der Zusammensetzung enthält.

Das Mischen erfolgt typischerweise über Statikmischer oder mit Hilfe von dynamischen Mischern. Beim Mischen ist darauf zu achten, dass die beiden Komponenten möglichst homogen vermischt werden. Werden die zwei Komponenten unvollständig gemischt, treten lokale Abweichungen vom vorteilhaften Mischungsverhältnis auf, was sich in einer Verschlechterung der mechanischen Eigenschaften auswirken kann.

Beim Kontakt der ersten Komponente **A** mit der zweiten Komponente **B** beginnt die Aushärtung durch chemische Reaktion. Dabei reagieren die Hydroxylgruppen und gegebenenfalls vorhandene weitere gegenüber Isocyanatgruppen reaktive Substanzen mit den Isocyanatgruppen. Überschüssige Isocyanatgruppen reagieren vorwiegend mit Feuchtigkeit. Als Resultat dieser Reaktionen härtet die Polyurethanzusammensetzung zu einem festen Material aus. Dieser Vorgang wird auch als Vernetzung bezeichnet. Ein weiterer Gegenstand der Erfindung ist somit auch eine ausgehärtete Polyurethanzusammensetzung, respektive Artikel, erhalten aus der Aushärtung der Polyurethanzusammensetzung, respektive dem Verfahren, wie im vorliegenden Dokument beschrieben.

Die ausgehärtete Polyurethanzusammensetzung ist dadurch gekennzeichnet, dass sie eine Brennbarkeit Klassifizierung von V0 gemessen ach der Vorschrift UL94 aufweist.

<u>Verfahren</u>

Die Erfindung betrifft somit auch ein Verfahren zum Verkleben von einem ersten Substrat mit einem zweiten Substrat,

In einer bevorzugten Ausführungsform ist das Verfahren zum Verkleben von einem ersten Substrat mit einem zweiten Substrat, gekennzeichnet dadurch, dass es die folgenden Schritte umfasst:

i) Mischen der ersten und der zweiten Komponente der erfindungsgemässen Polyurethanzusammensetzung;
ii) Applizieren der vermischten Polyurethanzusammensetzung auf mindestens eine der zu verklebenden Substratoberflächen;
iii) Fügen der zu verklebenden Substrate innerhalb der Topfzeit;
iv) Aushärten der Polyurethanzusammensetzung.

Die Erfindung betrifft somit weiterhin auch ein Verfahren zum Verfüllen von Fugen und Spalten zwischen zwei Substraten, welches die Schritte umfasst:

i) Mischen der vorgängig beschriebenen ersten und zweiten Komponente,
ii) Applizieren der vermischten Polyurethanzusammensetzung in die Fuge oder den Spalt,
iii) Aushärten der Polyurethanzusammensetzung.

In diesen Verfahren zum Verkleben oder zum Verfüllen von Fugen und Spalten sind geeignete Substrate insbesondere

- Glas, Glaskeramik, Glasmineralfasermatten;
- Metalle und Legierungen, wie Aluminium, Eisen, Stahl und Buntmetalle, sowie oberflächenveredelte Metalle und Legierungen, wie verzinkte oder verchromte Metalle; besonders bevorzugt sind Aluminiumlegierungen wie beispielsweise EN AW-5083, AlMg4,5Mn, insbesondere Plasmavorbehandeltes Aluminium;
- beschichtete und lackierte Substrate, wie pulverbeschichtete Metalle oder Legierungen und lackierte Bleche;
- Kunststoffe, wie Polyvinylchlorid (Hart- und Weich-PVC), Acrylonitril-Butadien-Styrol-Copolymere (ABS), Polycarbonat (PC), Polyamid (PA), Poly(methylmethacrylat) (PMMA), Polyester, Epoxidharze insbesondere Thermosets auf Epoxybasis, Polyurethane (PUR), Polyoxymethylen (POM), Polyolefine (PO), Polyethylen (PE) oder Polypropylen (PP), Ethylen/Propylen-Copolymere (EPM) und Ethylen/Propylen/Dien-Terpolymere (EPDM), wobei die Kunststoffe bevorzugt mittels Plasma, Corona oder Flammen oberflächenbehandelt sein können;
- Faserverstärkte Kunststoffe, wie kohlefaserverstärkte Kunststoffe (CFK), glasfaserverstärkte Kunststoffe (GFK) und Sheet Moulding Compounds (SMC);
- Holz, mit Harzen, beispielsweise Phenol-, Melamin- oder Epoxidharzen, gebundene Holzwerkstoffe, Harz-Textil-Verbundwerkstoffe und weitere sogenannte Polymer-Composites; sowie
- Beton, Mörtel, Ziegel, Gips und Natursteine wie Granit, Kalk- und Standstein oder Marmor.

In diesen Verfahren ist eines oder beide Substrate bevorzugt ein Metall oder eine Glaskeramik oder ein Glas oder ein glasfaserverstärkter Kunststoff oder ein kohlefaserverstärkter Kunststoff oder ein Thermoset auf Epoxybasis. Die Substrate können bei Bedarf vor dem Applizieren der Zusammensetzung vorbehandelt werden. Derartige Vorbehandlungen umfassen insbesondere physikalische und/oder chemische Reinigungsverfahren, sowie das Aufbringen eines Haftvermittlers, einer Haftvermittlerlösung oder eines Primers.

In einer bevorzugten Ausführungsform ist das das Verfahren zum Verkleben von einem ersten Substrat mit einem zweiten Substrat, dadurch gekennzeichnet, dass das Substrat ein Metall und/oder eine Metalllegierung, insbesondere Aluminium, ist.

In einem weiteren Aspekt umfasst die Erfindung daher ein Verfahren zu einem Verfüllen von Fugen und Spalten in einem Substrat umfassend die Schritte

i) Mischen der ersten Komponente und der zweiten Komponente einer zweikomponentigen Polyurethanzusammensetzung wie sie vorgehend beschrieben ist,
ii) Applizieren der gemischten Polyurethanzusammensetzung in die zu überbrückende Fuge zwischen zwei Substraten oder in den zu verfüllenden Spalt auf der Oberfläche eines Substrates,
iii) Aushärten der Polyurethanzusammensetzung in der Fuge oder im Spalt.

Als Substrate besonders geeignet sind Metall, Kunststoff, Holz, Glas, Keramik und faserverstärkte Kunststoffe, insbesondere Metall und Metalllegierungen und faserverstärkte Kunststoffe. In einem weiteren Aspekt umfasst die Erfindung daher auch einen verfüllten Artikel, welcher nach dem vorgehend beschriebenen Verfahren verfüllt wurde.

Die Polyurethanzusammensetzung wird weiter vorzugsweise als Matrix in Kompositwerkstoffen eingesetzt. Dabei dient die Polyurethanzusammensetzung als Bindemittel, in das Fasern oder andere verstärkende Strukturen eingebettet werden. In einem weiteren Aspekt umfasst die Erfindung daher die Verwendung einer zweikomponentigen Polyurethanzusammensetzung als Matrix in Kompositwerkstoffen.

Artikel

Dieser Artikel ist insbesondere ein Sandwichelement einer Leichtbaustruktur, ein Bauwerk, beispielsweise eine Brücke, ein industrielles Gut oder ein Konsumgut, insbesondere ein Fenster, ein Rotorblatt einer Windkraftanlage oder ein Transportmittel, insbesondere ein Fahrzeug, bevorzugt ein Automobil, besonders bevorzugt ein Elektroauto, ebenfalls eine Batterie, insbesondere eine Batterie für ein Fahrzeug, ein Bus, ein Lastkraftwagen, ein Schienenfahrzeug oder ein Schiff, sowie ein Flugzeug oder ein Helikopter; oder ein Anbauteil eines solchen Artikels.

Ein weiterer Gegenstand der Erfindung ist ein Artikel entstanden aus den beschriebenen Verfahren zum Verkleben, bei welchem die Polyurethanzusammensetzung zwei Substrate miteinander verbindet.

Die beschriebene Polyurethanzusammensetzung zeichnet sich durch eine hohe Festigkeit und Elastizität, welche über einen weiten Temperaturbereich von -35 bis 85 °C recht konstant sind, und über gute, weitgehend temperaturunabhängige Haftungseigenschaften auf metallischen Substraten aus. Aufgrund dieser Eigenschaften ist sie ganz besonders geeignet als struktureller Klebstoff für Verklebungen, welche unter Umgebungstemperaturen im Freien beansprucht werden.

Ein weiterer Gegenstand der Erfindung ist somit auch die Verwendung der beschriebenen Polyurethanzusammensetzung als struktureller Klebstoff zum Verkleben von zwei Substraten.

Verwendung

Die Erfindung betrifft ebenfalls die Verwendung der Polyurethanzusammensetzung.

Ein weiterer Gegenstand der Erfindung ist die Verwendung der erfindungsgemässen Polyurethanzusammensetzung als struktureller Klebstoff für das Verkleben von zwei Substraten, insbesondere in Automobilanwendungen oder als Dichtstoff oder als Vergussmasse.

Ebenfalls vorteilhaft verwendbar ist die beschriebene Polyurethanzusammensetzung als Vergussmasse, insbesondere als Vergussmasse für das Verfüllen von Spalten und Fugen, zu Reparaturzwecken, als Ballastausgleichsmasse oder zum Schutz von elektronischen Bauteilen.

Die Polyurethanzusammensetzung wird weiter vorzugsweise als Vergussmasse, insbesondere als Elektrovergussmasse, eingesetzt. In einem weiteren Aspekt umfasst die Erfindung daher die Verwendung einer zweikomponentigen Polyurethanzusammensetzung als Vergussmasse, insbesondere als Elektrovergussmasse.

## Beispiele

Im Folgenden sind Ausführungsbeispiele aufgeführt, welche die beschriebene Erfindung näher erläutern sollen. Selbstverständlich ist die Erfindung nicht auf diese beschriebenen Ausführungsbeispiele beschränkt.

Als "Normklima" (NK) wird eine Temperatur von 23±1°C (Raumtemperatur) und eine relative Luftfeuchtigkeit von 50±5% bezeichnet.

### Herstellung von Poivurethanzusammensetzungen

Für jede Zusammensetzung wurden die in den Tabellen 1 und 2 angegebenen Inhaltsstoffe in den angegebenen Mengen der ersten Komponente **A** mittels eines Vakuumdissolvers unter Feuchtigkeitsausschluss zu einer homogenen Paste verarbeitet und aufbewahrt. Ebenso wurden die in den Tabellen 1 und 2 angegebenen Inhaltsstoffe der zweiten Komponente **B** verarbeitet und aufbewahrt. Anschliessend wurden die beiden Komponenten mittels eines SpeedMixers® (DAC 150 FV, Hauschild) während 30 Sekunden zu einer homogenen Paste verarbeitet und diese unverzüglich folgendermassen geprüft. Das Volumenmischverhältnis entspricht einer 1:1 Mischung.

### Testmethoden

Zur Bestimmung der mechanischen Eigenschaften wurde der Klebstoff in Hantelform gemäss ISO 527, Teil 2, 1B, gebracht und während 7 Tage bei 23°C und 50% relativer Luftfeuchtigkeit gelagert bzw. ausgehärtet. Das Elastizitätsmodul im Bereich von 0.05 bis 0.25 % Dehnung **("E-Modul")** und die **Bruchdehnung** der so hergestellten Probekörper wurde gemäss DIN EN ISO 527 auf einer Zwick Z020 Zugprüfmaschine bei 23°C und 50% relativer Luftfeuchtigkeit und einer Prüfgeschwindigkeit von 10 mm/ min gemessen.

Zur Messung der **Zugscherfestigkeit** und dem **Bruchbild** wurden diverse Prüfkörper hergestellt, wobei der Klebstoff jeweils 1 Minute nach Abschluss der Mischzeit zwischen einem mit Heptan entfetteten E-beschichtetem Stahlblechen (100 mm x 25 mm x 0.8 mm) und einem Aluminiumblech (EN AW-5083, AIMg4,5Mn, 100 mm x 25 mm x 1.5 mm) in einer Schichtdicke von 1.6 mm und auf einer überlappenden Klebefläche 16 x 25 mm aufgebracht wurde. Die Prüfkörper wurden während 24 h bei 23°C gelagert bzw. ausgehärtet und dann wurde die Zugscherfestigkeit nach DIN EN

1465 bestimmt.

Das **Bruchbild** wurde mit anhand der folgenden Eigenschaften ausgewertet:

SCF = Substrat-kohäsiver Bruch

CF = Kohäsiver Bruch

AF = Adhäsiver Bruch

Die **Topfzeit** wurde in einem Viskosimeter gemessen als Zeit, bis die Viskosität nach Mischen der beiden Komponenten 500 Pa s betrug. Die Messung der Viskosität erfolgte auf einem Platten-Platten Rheometer MCR 101 (Firma Anton Paar) mit einem Plattendurchmesser von 25 mm und einem Plattenabstand von 0.2 mm bei einer Frequenz von 0.1 $s^{-1}$ und einer Temperatur von 25°C. Dazu wurden die beiden Komponenten zunächst während 30 Sekunden von Hand gemischt und danach sofort für die Messung auf die Platten angebracht.

## Verwendete Substanzen

**Tabelle 1:** Verwendete Substanzen.

| **Name** | | **Beschreibung** | **Produktname** |
|---|---|---|---|
| Polyol **P** | **P1** | Dimerfettsäure-basiertes Polyester-Polyol | Priplast 1838 |
| | **P2** | Butylenoxid-basiertes Polyol | Adiansol TO 470 |
| | **P3** | Dimerfettsäure-basiertes Polyester-Polyol | Sovermol® RC 1005 |
| | **P4** | Polybutadienpolyol | Poly bd R-45HTLO |
| Diol **O** | | 1,5-Pentandiol | Sigma Aldrich |
| Verbindung **T** | | Ethylenglycol Bis(3-mercaptopropionat) | Thiocure GDMP |
| Polyisocyanat **I** | | Diphenylmethan-4,4'-diisocyanat (MDI) | Desmodur 44 MC |
| Metallkatalysator **K** | | Dibutylzinndilaurat (DBTL) | |
| Flammschutzmittel **F** | **F1** | Aliphatisches Phosphoramidat (Feststoff) | Daiguard 850 |
| | **F2** | Feinkörniges Ammoniumpolyphosphat | Exolit AP 422 |
| | **F3** | Gefälltes Aluminiumhydroxid | Martinal OL-104 LEO |
| Lösungsmittel **LM** | | Polyethergylcol | Ensoline PHP |
| Weichmacher **WM** | | Rizinusöl | |
| Füllstoff **FS** | | Kreide | Omyacarb 5-GU |
| Haftvermittler **HV** | | Epoxidfunktionelles Silan | Silquest A-187 Silane |

## Polvurethanzusammensetzunq

Bei den Beispielen **Z1** bis **Z3** handelt es sich um erfindungsgemässe Zusammensetzungen. Bei dem Vergleichsbeispiel **Z4** (Ref.) wurden die Flammschutzmittel **F** in gleicher Menge mit Füllstoff **FS** (Kreide) ersetzt.

**Tabelle 2:** Zusammensetzungen.

| **Beispielzusammensetzungen** | **Z1** | **Z2** | **Z3** | **Z4** (Ref.) |
|---|---|---|---|---|
| Erste Komponente **A** (Mengen in Gew.-% bezogen auf Komponente **A**) | | | | |
| **P1** | 16.5 | 24.5 | 22.5 | 22.5 |
| **P2** | 1.5 | 1.5 | 1.5 | 1.5 |

(fortgesetzt)

| **Beispielzusammensetzungen** | **Z1** | **Z2** | **Z3** | **Z4** (Ref.) |
|---|---|---|---|---|
| Erste Komponente **A** (Mengen in Gew.-% bezogen auf Komponente **A**) | | | | |
| **P3** | 11 | - | - | - |
| **O** | 2.5 | 2.5 | 2.5 | 2.5 |
| **T** | 1.2 | 1.4 | 0.4 | 0.4 |
| **K** | 0.1 | 0.1 | 0.1 | 0.1 |
| **F1** | 9.5 | 10 | 11 | - |
| **F2** | - | 20 | 21 | - |
| **F3** | 54.7 | 31 | 31 | - |
| **LM** | 3 | 4 | 4 | 4 |
| **WM** | - | 5 | 6 | 6 |
| **FS** | - | - | - | 63 |
| Zweite Komponente **B** (Mengen in Gew.-% bezogen auf Komponente **B**) | | | | |
| **P4** | 48 | 45 | 46 | 46 |
| **F2** | 20 | - | - | - |
| **F3** | - | 25 | 26 | - |
| **I** | 28 | 26 | 26 | 26 |
| **HV** | 4 | 4 | 2 | 2 |
| **FS** | - | - | - | 26 |

## Materialprüfungen

Die Resultate aus Tabelle 4 zeigen, dass bei den erfindungsgemässen Zusammensetzungen **Z1** bis **Z3** eine besonders gute Haftung auf Aluminium erreicht wird, da ein komplett kohäsives Bruchbild erreicht wird. Beim Vergleichsbeispiel **Z4** (Ref.), welche keine Flammschutzmittel **F** enthält, zeigt das Bruchbild einen komplett adhäsiven Bruch. Dies zeigt, dass durch das Weglassen von Flammschutzmitteln **F** (und Ersetzen derselben durch einen herkömmlichen Füllstoff) in der Zusammensetzung überraschenderweise eine deutlich schwächere Haftung erreicht wird. Bei den übrigen mechanischen Werten sind die erfindungsgemässen Zusammensetzungen **Z1** bis **Z3** dem Vergleichsbeispiel **Z4** (Ref.) überlegen. Überdies zeigt Tabelle 3, dass die Topfzeit anhand der Menge von Verbindung T und Metallkatalysator **K** eingestellt werden kann.

**Tabelle 3:** Materialprüfungen.

| **Resultate** | **Z1** | **Z2** | **Z3** | **Z4** (Ref.) |
|---|---|---|---|---|
| Bruchbild | 100% CF | 100% SCF | 100% CF | 100% AF |
| Zugscherfestigkeit (MPa) | 2.1 | 3.3 | 3.1 | 1.5 |
| E-Modul 0.05 bis 0.25% (MPa) | 5.13 | 14.81 | 10.46 | 5.74 |
| Bruchdehnung (%) | 598 | 271 | 262 | 316 |
| Topfzeit (Min.) | 9.5 | 8.5 | 7.9 | 11.4 |

## Patentansprüche

**1.** Polyurethanzusammensetzung bestehend aus einer ersten Komponente **A** und einer zweiten Komponente **B,** wobei

- die erste Komponente **A**

- mindestens ein Polyol **P;**
- mindestens ein Diol **O** mit einem mittleren Molekulargewicht von weniger als 250 g/mol;
- mindestens eine Verbindung **T,** die mindestens eine Thiolgruppe aufweist, umfasst;

und

- Die zweite Komponente **B**

    - optional ein Polyol **P;**
    - mindestens ein Polyisocyanat I umfasst;

wobei in einer der beiden Komponente **A** und **B** zusätzlich mindestens ein Metallkatalysator **K** für die Reaktion von Hydroxylgruppen und Isocyanatgruppen enthalten ist, der Thiokomplexe bilden kann, und wobei die Polyurethanzusammensetzung zusätzlich mindestens 10 Gew.-%, bezogen auf die gesamte Polyurethanzusammensetzung, eines Flammschutzmittels **F** enthält.

**2.** Die Polyurethanzusammensetzung gemäss Anspruch 1, **dadurch gekennzeichnet, dass** das Polyol **P** eine mittlere OH-Funktionalität im Bereich von 2 bis 4 umfasst und/oder ein mittleres Molekulargewicht im Bereich von 250 bis 10'000 g/mol und/oder eine OH-Zahl im Bereich von 250 bis 600 mg KOH/g aufweist.

**3.** Die Polyurethanzusammensetzung gemäss einem der Ansprüche 1 bis 2, **dadurch gekennzeichnet, dass** das Polyol **P** Polybutadienpolyole, Polycarbonatpolyole, Polyesterpolyole, Polyetherpolyole, Poly(meth)acrylatpolyole oder eine Mischung dieser Polyole umfasst.

**4.** Polyurethanzusammensetzung gemäss einem der Ansprüche 1 bis 3, **dadurch gekennzeichnet, dass** das Diol O ein lineares aliphatisches Diol mit zwei primären Hydroxylgruppen ist, die über eine C2- bis C9-Kohlenstoffkette verbunden sind, insbesondere ausgewählt aus der Gruppe bestehend aus 1,4-Butandiol 1,5-Pentandiol, 1,6-Hexandiol, 1,7-Heptandiol, 1,8-Octandiol und 1,9-Nonandiol.

**5.** Polyurethanzusammensetzung gemäss einem der Ansprüche 1 bis 4, **dadurch gekennzeichnet, dass** das Polyisocyanat I eine bei Raumtemperatur flüssige Form von 4,4'-, 2,4'- oder 2,2'-Diphenylmethandiisocyanat und beliebige Gemische dieser Isomeren (MDI) in Form von polymerem MDI oder MDI mit Anteilen von Oligomeren oder Derivaten, insbesondere Carbodiimiden, ist.

**6.** Polyurethanzusammensetzung gemäss einem der Ansprüche 1 bis 5, **dadurch gekennzeichnet, dass** der Metallkatalysator **K** eine Zinn(IV)-Verbindung und/oder eine Bismut(III)-Verbindung, umfasst.

**7.** Polyurethanzusammensetzung gemäss einem der Ansprüche 1 bis 6, **dadurch gekennzeichnet, dass** der Metallkatalysator **K** in der ersten Komponente **A** enthalten ist.

**8.** Polyurethanzusammensetzung gemäss einem der Ansprüche 1 bis 7, **dadurch gekennzeichnet, dass** das Flammschutzmittel **F** unter Normbedingungen fest ist.

**9.** Polyurethanzusammensetzung gemäss einem der Ansprüche 1 bis 8, **dadurch gekennzeichnet, dass** das Flammschutzmittel **F eine** phosphororganische Verbindung, insbesondere Phosphoramidate und/oder Phosphate, und/oder Metallhydroxide, insbesondere Aluminiumhydroxide, umfasst.

**10.** Polyurethanzusammensetzung gemäss einem der Ansprüche 1 bis 9, **dadurch gekennzeichnet, dass** das Flammschutzmittel **F eine** Kombination von aliphatischem Phosphoramidat, vorzugweise in einem Bereich von 5 bis 20 Gew.-%, feinkörnigem Ammoniumpolyphosphat, vorzugsweise in einem Bereich von 10 bis 30 Gew.-%, und gefälltem Aluminiumhydroxid, vorzugsweise in einem Bereich von 20 bis 60 Gew.%, alle bezogen auf die erste Komponente **A,** umfasst.

**11.** Polyurethanzusammensetzung gemäss einem der Ansprüche 1 bis 10, **dadurch gekennzeichnet, dass** die erste Komponente **A** jeweils bezogen auf die gesamte Zusammensetzung der Komponente **A**

- 10 bis 40 Gew.-% Polyol **P;**
- 1 bis 5 Gew.-% Diol **O;**
- 0.1 bis 5 Gew.-% Verbindung **T;**

- 0.01 bis 2.5 Gew.-% Metallkatalysator **K;**
- 15 bis 80 Gew.-% Flammschutzmittel **F;**
- 0 bis 8 Gew.-% Lösungsmittel **LM;**
- 0 bis 10 Gew.-% Weichmacher **WM;**
- 0 bis 40 Gew.-% Füllstoff **FS;**

Und dass die zweite Komponente **B** jeweils bezogen auf die gesamte Zusammensetzung der Komponente **B**

- 25 bis 75 Gew.-% Polyol **P;**
- 15 bis 70 Gew.-% Polyisocyanat **I;**
- 0 bis 6 Gew.-% Haftvermittler **HV;**
- 0 bis 40 Gew.-% Füllstoff **FS** enthält,

sowie gegebenenfalls weitere Bestandteile enthält.

**12.** Verfahren zum Verkleben von einem ersten Substrat mit einem zweiten Substrat, umfassen die Schritte:

i) Mischen der ersten und der zweiten Komponente einer Polyurethanzusammensetzung gemäss einem der Anspruche 1 bis 11;
ii) Applizieren der vermischten Polyurethanzusammensetzung auf mindestens eine der zu verklebenden Substratoberflächen;
iii) Fügen der zu verklebenden Substrate innerhalb der Topfzeit;
iv) Aushärten der Polyurethanzusammensetzung.

**13.** Das Verfahren gemäss Anspruch 12, **dadurch gekennzeichnet, dass** das Substrat ein Metall und/oder eine Metalllegierung, insbesondere Aluminium, ist.

**14.** Ein Artikel entstanden aus dem Verfahren zum Verkleben gemäss einem der Ansprüche 12 bis 13.

**15.** Verwendung einer Polyurethanzusammensetzung gemäss einem der Ansprüche 1 bis 11 als struktureller Klebstoff für das Verkleben von zwei Substraten, insbesondere in Automobilanwendungen, oder als Dichtstoff oder als Vergussmasse.

Europäisches Patentamt
European Patent Office
Office européen des brevets

# EUROPÄISCHER RECHERCHENBERICHT

Nummer der Anmeldung
EP 24 21 2222

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| A,D | WO 2019/002538 A1 (SIKA TECH AG [CH]) 3. Januar 2019 (2019-01-03)<br>* Ansprüche 1-15 *<br>* Seite 1, Zeile 4 - Zeile 7 *<br>* Seite 2, Zeile 27 - Zeile 33 *<br>* Seite 22, Zeile 9 - Zeile 32 *<br>* Seite 31, Zeile 5 - Seite 34, Zeile 2; Beispiele; Tabellen 7-10 *<br>----- | 1-15 | INV.<br>C08G18/10<br>C08G18/24<br>C08G18/32<br>C08G18/40<br>C08G18/42<br>C08G18/48<br>C08G18/66<br>C08G18/69<br>C08G18/76<br>C08G18/38<br>C08K3/22 |
| A | WO 2023/031304 A1 (SIKA TECH AG [CH]) 9. März 2023 (2023-03-09)<br>* Ansprüche 1-15 *<br>* Seite 1, Zeile 4 - Zeile 7 *<br>* Seite 3, Zeile 30 - Seite 4, Zeile 20 *<br>* Referenzbeispiel 1; Seite 29, Zeile 15 - Seite 36, Zeile 15; Tabelle 3 *<br>----- | 1-15 | |
| A | WO 2022/167403 A1 (SIKA TECH AG [CH]) 11. August 2022 (2022-08-11)<br>* Ansprüche 1-15 *<br>* Seite 1, Zeile 4 - Zeile 8 *<br>* Seite 3, Zeile 26 - Seite 4, Zeile 20 *<br>* Seite 27, Zeile 19 - Seite 28, Zeile 14 *<br>* Seite 29, Zeile 16 - Seite 32, Zeile 17; Beispiele C-3; Tabellen 1-3 *<br>----- | 1-15 | RECHERCHIERTE SACHGEBIETE (IPC)<br>C08G<br>C08K<br>C08J<br>C09J |

1 Der vorliegende Recherchenbericht wurde für alle Patentansprüche erstellt

| Recherchenort | Abschlußdatum der Recherche | Prüfer |
|---|---|---|
| München | 28. März 2025 | Paulus, Florian |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument
& : Mitglied der gleichen Patentfamilie, übereinstimmendes Dokument

EPO FORM 1503 03.82 (P04C03)

# ANHANG ZUM EUROPÄISCHEN RECHERCHENBERICHT ÜBER DIE EUROPÄISCHE PATENTANMELDUNG NR.

EP 24 21 2222

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

28-03-2025

| Im Recherchenbericht angeführtes Patentdokument | Datum der Veröffentlichung | Mitglied(er) der Patentfamilie | Datum der Veröffentlichung |
|---|---|---|---|
| WO 2019002538 A1 | 03-01-2019 | BR 112019027543 A2 | 07-07-2020 |
| | | CN 110809589 A | 18-02-2020 |
| | | EP 3645594 A1 | 06-05-2020 |
| | | ES 2913663 T3 | 03-06-2022 |
| | | JP 7247115 B2 | 28-03-2023 |
| | | JP 2020525561 A | 27-08-2020 |
| | | PL 3645594 T3 | 18-07-2022 |
| | | US 2020207980 A1 | 02-07-2020 |
| | | WO 2019002538 A1 | 03-01-2019 |
| WO 2023031304 A1 | 09-03-2023 | CN 117642444 A | 01-03-2024 |
| | | EP 4396255 A1 | 10-07-2024 |
| | | US 2024336817 A1 | 10-10-2024 |
| | | WO 2023031304 A1 | 09-03-2023 |
| WO 2022167403 A1 | 11-08-2022 | EP 4288474 A1 | 13-12-2023 |
| | | US 2023406993 A1 | 21-12-2023 |
| | | WO 2022167403 A1 | 11-08-2022 |

EPO FORM P0461

Für nähere Einzelheiten zu diesem Anhang : siehe Amtsblatt des Europäischen Patentamts, Nr.12/82

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- EP 3645594 B1
- EP 4127008 A1
- EP 1551895 A
- EP 2791153 A